# FASCICULE DE BREVET EUROPEEN

(11) **EP 3 719 278 B1**
(45) Date de publication et mention de la délivrance du brevet: **07.01.2026**
(21) Numéro de dépôt: 20165555.2
(22) Date de dépôt: 25.03.2020
(51) Int. Cl.: F02C 7/14, B64D 29/02, B64D 33/10, F02K 3/04

(54) **AÉRONEF COMPORTANT UNE NACELLE**
LUFTFAHRZEUG UMFASSEND EINE GONDEL
AIRCRAFT COMPRISING A NACELLE

(30) Priorité: 03.04.2019 FR 1903542
(43) Date de publication de la demande: 07.10.2020
(73) Titulaire: Safran Nacelles, 76700 Gonfreville-l'Orcher (FR)
(72) Inventeur: PEYRON, Vincent, 77550 MOISSY CRAMAYEL (FR); BOUCHOUT, Jean-Nicolas, 77550 MOISSY CRAMAYEL (FR)
(74) Mandataire: Germain Maureau

(56) Documents cités:
- WO-A1-2015/136210
- WO-A2-2010/136710
- CA-A1- 2 950 782
- FR-A1- 3 002 978
- US-A1- 2008 053 099
- US-A1- 2013 219 854
- US-A1- 2018 163 566
- LEPLAT ING V ET AL: "Etude num�rique d'�changeurs de chaleur surfaciques � ailettes pour un turbor�acteur", 1 January 2013 (2013-01-01), pages 1 - 21, XP055905267, Retrieved from the Internet <URL:http://www.isilf.be/Articles/ISILF13p43gramme.pdf> [retrieved on 20220325]

## Description

La présente invention se rapporte au domaine des systèmes de refroidissement de turboréacteur pour aéronef.

Un aéronef comporte un fuselage, une ou plusieurs ailes et un ou plusieurs ensembles propulsifs comprenant chacun un turboréacteur logé dans une nacelle. Chaque ensemble propulsif est rattaché à l'aéronef par un mât situé généralement sous ou sur une aile ou au niveau du fuselage de l'aéronef.

Un turboréacteur peut également être appelé moteur. Dans la suite de la description, les termes moteur et turboréacteur seront utilisés indifféremment.

Plus particulièrement, dans le cas d'un aéronef comportant deux ensembles propulsifs, chaque ensemble propulsif est disposé de part et d'autre du fuselage.

Une nacelle présente généralement une structure tubulaire comprenant une section amont comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

En outre, une nacelle comprend usuellement une structure externe comprenant une partie fixe et une partie mobile (moyens d'inversion de poussée), et une structure interne fixe, dite Inner Fixed Structure (IFS), concentrique de la structure externe. La structure interne fixe entoure le cœur du turboréacteur en arrière de la soufflante. Ces structures externe et interne définissent une veine annulaire d'écoulement, encore appelé veine secondaire, visant à canaliser un flux d'air froid, dit secondaire, qui circule à l'extérieur du turboréacteur.

La structure externe comporte un carénage externe définissant une surface aérodynamique externe, et un carénage interne définissant une surface aérodynamique interne, les carénages interne et externe étant reliés en amont par une paroi de bord d'attaque formant lèvre d'entrée d'air.

De manière générale, le turboréacteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu dans le turboréacteur pour assurer une bonne lubrification de ces moyens de transmission et les refroidir. Le lubrifiant est de l'huile. Dans la suite de la description, on emploiera indifféremment les termes lubrifiant et huile.

Un système de refroidissement de lubrifiant comportant un échangeur de chaleur permet de refroidir le lubrifiant.

Il existe des systèmes de refroidissement de lubrifiant comportant un échangeur air/huile utilisant l'air froid de la veine secondaire de la nacelle ou d'un des premiers étages du compresseur pour refroidir l'huile du turboréacteur. Un tel échangeur est un échangeur à ailettes. Il comporte des ailettes dans le flux d'air froid qui perturbent l'écoulement du flux d'air dans la veine secondaire ou dans le compresseur, ce qui entraine des pertes de charges (traînée), et donc des pertes de performances pour l'aéronef en termes de consommation de carburant (paramètre FB (Fuel Burnt)).

Il existe également des systèmes de refroidissement comportant un échangeur air/huile utilisant de l'air froid prélevé à l'extérieur de la nacelle par une écope disposée sur le carénage externe de la nacelle, l'air froid étant mis en circulation à travers l'échangeur et pouvant servir au dégivrage de la nacelle par circulation dans des conduits disposés au contact des parois de la structure externe de la nacelle, par exemple au niveau de la lèvre d'entrée d'air. Un tel système de refroidissement permet un meilleur contrôle des énergies thermiques échangées, mais la présence d'écopes dans le carénage externe de la nacelle entraîne une perte des performances aérodynamiques, de la même manière qu'un échangeur à ailettes, et donc des pertes de performances pour l'aéronef en termes de consommation de carburant (paramètre FB (Fuel Burnt)).

Il existe en outre des systèmes de refroidissement comportant un échangeur de chaleur, dit source chaude, entre un fluide caloporteur et l'huile moteur, et un échangeur de chaleur, dit source froide, entre le fluide caloporteur et de l'air. Un tel système de refroidissement comporte un conduit de circulation du fluide caloporteur en circuit fermé. Plus particulièrement, le conduit de circulation du fluide caloporteur comporte une portion disposée dans la nacelle au contact du carénage externe et/ou interne, ladite portion formant l'échangeur de chaleur source froide. On parle d'échangeur surfacique. Encore plus particulièrement, la portion disposée dans la nacelle au contact du carénage interne et/ou externe comporte une pluralité de canaux disposés en parallèle, lesdits canaux étant formés par une double paroi du carénage interne et/ou externe. On parle alors d'échangeur structural.

Ainsi, les systèmes de refroidissement du turboréacteur comportent au moins un échangeur de chaleur disposés dans la nacelle.

Les différentes phases de vol d'un aéronef sont le roulage au sol (taxi), le point fixe avant décollage, le décollage ou le décollage avorté, la montée, la croisière, la descente, l'approche, l'atterrissage avorté, le freinage avec inversion de poussée.

Lors des différentes phases de vol, une nacelle est soumise à des impacts tels que des impacts d'oiseaux ou de débris qui peuvent détériorer la nacelle et endommager les échangeurs de chaleur qu'elle comporte et ainsi dégrader la fiabilité du turboréacteur. Plus particulièrement une nacelle d'un aéronef comportant deux ensembles propulsifs disposés de part et d'autre du fuselage, est soumise à des impacts de débris provenant de projections de l'ensemble propulsif opposé. Les impacts d'oiseaux quant à eux ont lieu plus précisément au niveau de la section amont.

La présente invention a notamment pour but de remédier à ces inconvénients.

Il est donc nécessaire de fournir une nacelle comportant un échangeur non soumis à de tels impacts. Les demandes de brevet US 2013/219854 A1, WO 2010/136710 A2 et CA 2 950 782 A1 décrivent des moteurs à turbine à gaz pour aéronefs.

A cet effet, l'invention a pour objet un aéronef répondant aux caractéristiques de la revendication indépendante 1. D'autres caractéristiques correspondant à l'invention sont définies dans les revendications dépendantes 2 à 5.

D'autres caractéristiques et avantages de la présente invention apparaitront à la lecture de la description qui va suivre et à l'examen des figures annexées dans lesquelles :
[Fig. 1] est une vue schématique en coupe transversale d'un aéronef comportant deux ensembles propulsifs comprenant une nacelle selon l'invention ;
[Fig. 2] est une vue schématique d'une nacelle de turboréacteur d'aéronef selon l'invention ;
[Fig. 3A] est une vue schématique en coupe d'une section médiane de d'une nacelle selon l'invention destinée à être disposée à gauche du plan longitudinal d'un aéronef ;
[Fig. 3B] est une vue schématique en coupe transversale d'une section médiane de d'une nacelle selon l'invention destinée à être disposée à droite du plan longitudinal d'un aéronef ;
[Fig. 4] est une vue schématique d'un premier mode de réalisation d'un système de refroidissement incluant au moins un échangeur de chaleur disposé dans une nacelle et ne faisant pas partie de l'invention ;
[Fig. 5] est une vue schématique d'un deuxième mode de réalisation d'un système de refroidissement incluant au moins un échangeur de chaleur disposé dans une nacelle et ne faisant pas partie de l'invention ;
[Fig. 6] est une vue schématique d'un troisième mode de réalisation d'un système de refroidissement incluant au moins un échangeur de chaleur disposé dans une nacelle selon l'invention ;
[Fig. 7] est une vue schématique en coupe longitudinale d'une lèvre d'entrée d'air d'une une nacelle selon l'invention.

Dans la description qui va suivre et dans les revendications, des composants identiques, similaires ou analogues seront désignés par les mêmes chiffres de référence et on emploiera les termes « amont », « aval », « supérieur », « inférieur », etc. à titre non limitatif et en référence aux dessins afin de faciliter la description.

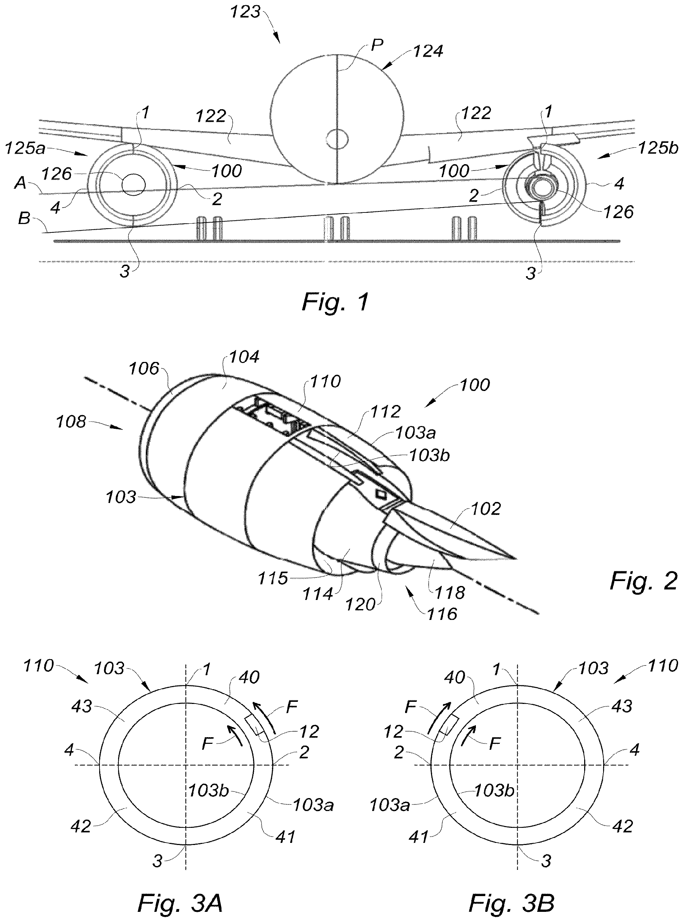

La figure 1 illustre un aéronef 123 vu de face, c'est-à-dire depuis sa face avant dans le sens de déplacement de l'aéronef, comprenant un fuselage 124, deux ailes 122, et deux ensembles propulsifs, respectivement gauche 125a et droite 125b. Le fuselage 124 s'étend longitudinalement selon un plan longitudinal p.

Chaque ensemble propulsif 125a, 125b, comporte un turboréacteur 126, entouré d'une nacelle 100 sensiblement tubulaire.

Les ensembles propulsifs 125a, 125b, sont disposés dans un même plan transversal au plan longitudinal p dans lequel s'étend le fuselage 124.

Chaque nacelle 100, comporte un point supérieur 1, un point inférieur 3, un point latéral proximal 2 par rapport au plan longitudinal p et un point latéral distal 4 par rapport au plan longitudinal p. Ainsi, chaque nacelle est divisée en quatre cadrans, comme indiqué au regard de la figure 3.

Chaque nacelle présente, entre les points supérieur 1 et inférieur 3, une partie distale dite « outboard » en terminologie anglaise et une partie proximale dite « inboard » en terminologie anglaise.

En outre, chaque nacelle 100 des ensembles propulsifs 125a, 125b présente, entre les points latéraux proximal 2 et distal 4, une partie supérieure, proche de l'aile 122, et une partie inférieure, opposée.

Chaque nacelle 100 peut être soumise à des impacts de débris provenant de projections de l'ensemble propulsif opposé. Ces impacts peuvent avoir lieu dans la partie inférieure proximale ou « inboard » de chaque nacelle. En effet, la partie distale ou « outboard » n'est pas exposée et la partie supérieure proximale ou « inboard » est protégée par le fuselage 124.

Les axes A et B délimitent la zone impactable par de tels débris de la nacelle 100 de l'ensemble propulsif gauche 125a. Cette zone correspond au cadran inférieur proximal 41 illustré à la figure 3A.

La figure 2 illustre une nacelle 100 de la figure 1, suspendue à un pylône 102 destiné à être fixé à une aile 122 (figure 1) de l'aéronef 123 de la figure 1. La nacelle 100 comprend une structure externe 103 comprenant une section amont 104 dotée d'une lèvre 106 formant une entrée d'air 108, une section médiane 110, et une section aval 112.

La nacelle comprend en outre une structure interne fixe 114 entourant une partie aval du turboréacteur 126 (figure 1) de manière concentrique par rapport à la section aval 112. La structure interne fixe 114 et la structure externe 103 délimitent une veine annulaire 115 définissant un passage pour un flux d'air secondaire (non représenté) froid.

La nacelle 100 comprend également une tuyère d'éjection 116 comprenant un cône d'éjection 118 de gaz et une buse d'éjection 120 de gaz. Le cône d'éjection 118 et la buse d'éjection 120 définissent un passage pour un flux d'air chaud (non représenté) sortant du turboréacteur 126 (figure 1).

La structure externe 103 comporte un carénage externe 103a définissant une surface aérodynamique externe, et un carénage interne 103b définissant une surface aérodynamique interne, les carénages externe 103a et interne 103b étant reliés en amont par une paroi de bord d'attaque formant la lèvre 106 d'entrée d'air 108.

La nacelle 100 peut être soumise à des impacts d'oiseaux au niveau de la section amont 104.

Les figures 3A et 3B illustrent une structure externe 103 de nacelle 100 selon l'invention, en coupe au niveau de la section médiane 110, les nacelles 100 étant destinées respectivement à être disposées à gauche et à droite du plan longitudinal p d'un aéronef (figure 1).

La section médiane 110 est divisée en quatre cadrans, respectivement supérieur proximal 40, inférieur proximal 41, inférieur distal 42, et supérieur distal 43.

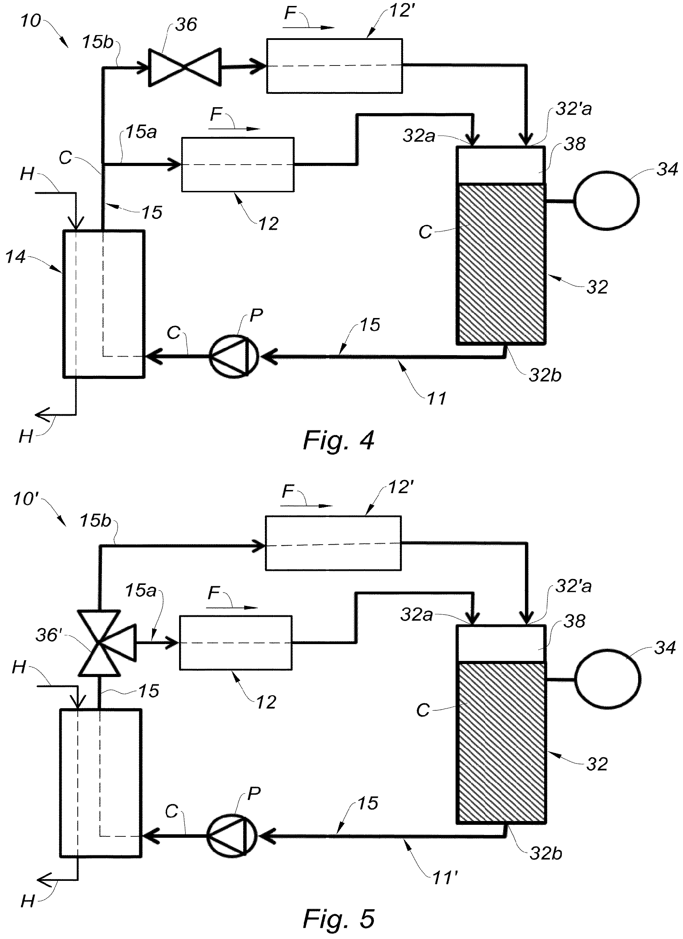

La section médiane 110 comprend un échangeur de chaleur surfacique dit échangeur source froide 12 entre un fluide caloporteur C (figure 4) à refroidir et un flux d'air froid F. L'échangeur source froide 12 est disposé au contact du carénage externe 103a de la nacelle 100, dans le cadran supérieur proximal 40 de la section médiane 110, de sorte qu'il ne soit pas impacté par des impacts d'oiseaux ou de débris provenant d'une nacelle d'un ensemble propulsif opposé.

Dans une variante non représentée, l'échangeur source froide 12 est disposé au contact du carénage interne 103b de la nacelle, dans le cadran supérieur proximal 40 de la section médiane 110.

Dans des variantes non représentées, l'échangeur source froide 12 est disposé dans le cadran supérieur proximal de la section aval 112, au contact du carénage externe 103a ou interne 103b.

Dans des variantes non représentées, l'échangeur source froide 12 est disposé dans le cadran supérieur distal 43 de la section médiane 110 et/ou aval 112, au contact du carénage externe 103a ou interne 103b.

Dans d'autres variantes non représentées, plusieurs échangeurs source froide 12 sont disposés dans le cadran supérieur proximal 40 et/ou dans le cadran supérieur distal 43 et/ou dans le cadran inférieur distal, de la section médiane 110 et/ou aval 112, au contact du carénage externe 103a ou interne 103b.

De manière non représentée, l'échangeur source froide 12 comporte une pluralité de canaux disposés en parallèle. En outre, il est formé au moins en partie par une double paroi du carénage interne et/ou externe de la nacelle.

La figure 4 illustre un système de refroidissement 10 comportant un premier échangeur source froide 12, correspondant à l'échangeur source froide 12 de la figure 3, un échangeur dit source chaude 14 entre un lubrifiant H du turboréacteur 126 (figure 1) à refroidir et le fluide caloporteur C, et un deuxième échangeur source froide 12'.

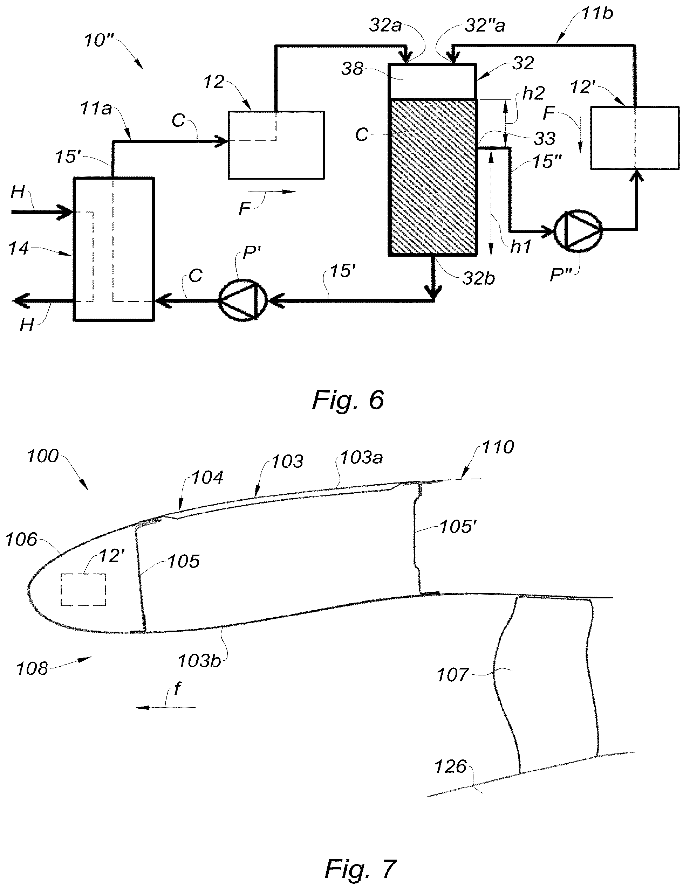

Les échangeurs source froide 12, 12' et source chaude 14 sont disposés dans un circuit fermé 11 comprenant un conduit de circulation 15 du fluide caloporteur C, les premier 12 et deuxième 12' échangeurs source froide étant disposés en parallèle dans le circuit fermé 11. Le fluide caloporteur C circule dans le premier échangeur source froide 12 via une première portion 15a du conduit de circulation 15, et il circule dans le deuxième échangeur source froide 12' via une deuxième portion 15b du conduit de circulation 15. L'échangeur source chaude 14 est disposé dans le turboréacteur 126 (figure 1), tandis que le deuxième échangeur source froide 12' est disposé dans la nacelle, dans une zone exposée aux impacts d'oiseaux, comme il sera vu au regard de la figure 7.

Le système de refroidissement 10 comprend en outre un vase d'expansion 32 dans le circuit fermé 11, entre les échangeurs source froide 12, 12' et l'échangeur source chaude 14.

Le vase d'expansion 32 est étanche de sorte que son volume est lié à la pression du conduit de circulation 15 du fluide caloporteur C.

Le vase d'expansion 32 comporte un capteur de niveau 34. Il est rempli de fluide caloporteur C et de ciel gazeux 38. Il présente deux entrées 32a, 32'a de fluide caloporteur C, provenant respectivement du premier échangeur source froide 12 et du deuxième échangeur source froide 12', et une sortie 32b de fluide caloporteur C.

Une pompe P permet la circulation du fluide caloporteur C dans le circuit fermé 11.

Une vanne 36, disposée dans le circuit fermé 11 en amont du deuxième échangeur source froide 12', permet de fermer la circulation de fluide caloporteur C dans le deuxième échangeur source froide 12', en fonction du niveau de fluide dans le vase d'expansion. La vanne 36 est disposée dans la deuxième portion 15b du conduit de circulation 15 de fluide caloporteur C.

Le capteur de niveau 34 permet de détecter une fuite dans le deuxième échangeur source froide 12'. C'est donc un dispositif de détection de fuite.

En variante, le circuit fermé 11 comprend un dispositif de détection de fuite tel qu'un capteur de pression de circulation du fluide caloporteur C, ou des capteurs de comparaison des débits d'entrée et de sortie du fluide caloporteur C dans le vase d'expansion 32.

Lorsque la vanne 36 est ouverte, le fluide caloporteur C circule dans le circuit fermé 11 via le conduit de circulation 15, en passant dans le premier échangeur source froide 12 et dans le deuxième échangeur source froide 12', où il est refroidi par de l'air froid F, puis dans le vase d'expansion, puis l'échangeur source chaude 14 où il est réchauffé par le lubrifiant H. Ainsi, le fluide caloporteur C refroidi par les échangeurs source froide 12, 12' permet de refroidir le lubrifiant H. Le fluide caloporteur C est destiné à circuler à la fois dans les échangeurs source froide 12, 12' et dans l'échangeur source chaude 14.

Lorsque la vanne 36 est fermée, le fluide caloporteur C circule dans le circuit fermé 11 via le conduit de circulation 15, en passant dans le premier échangeur source froide 12, où il est refroidi par de l'air froid F, puis dans le vase d'expansion, puis dans l'échangeur source chaude 14 où il est réchauffé par le lubrifiant H. Ainsi, le fluide caloporteur C refroidi par le premier échangeur source froide 12 permet de refroidir le lubrifiant H. Le fluide caloporteur C est destiné à circuler à la fois dans le premier échangeur source froide 12 et dans l'échangeur source chaude 14.

La figure 5 illustre un système de refroidissement 10' selon une variante de la figure 4. Dans cette variante, une vanne 36' est disposée à l'intersection entre le premier conduit de circulation 15a de fluide caloporteur C et le deuxième conduit de circulation 15b de fluide caloporteur C. Elle est commandée en fonction du niveau de fluide dans le vase d'expansion, du besoin de dégivrage et des besoins de refroidissement.

Cette vanne 36' est une vanne trois voies. Elle permet de gérer le débit de fluide caloporteur C envoyé vers le deuxième échangeur source froide 12' ou vers le premier échangeur source froide 12.

La figure 6 illustre un système de refroidissement 10" selon une troisième variante.

Dans cette variante, le premier échangeur source froide 12 est intégré dans un premier circuit fermé 11a et le deuxième échangeur source froide 12' est disposé dans un deuxième circuit fermé 11b. Ainsi, les premier 12 et deuxième 12' échangeurs source froide sont intégrés dans des circuits fermés 11a, 11b, différents.

Chaque circuit fermé 11a, 11b comprend un conduit de circulation du fluide caloporteur. A cet effet, le premier circuit fermé 11a comprend un premier conduit de circulation 15' et le deuxième circuit fermé 11b comprend un deuxième conduit de circulation 15".

Le premier circuit fermé 11a comprend l'échangeur source chaude 14, le premier échangeur source froide 12, le vase d'expansion 32 et une première pompe P', tandis que le deuxième circuit fermé 11b comprend le deuxième échangeur source froide 12', le vase d'expansion 32 et une deuxième pompe P".

Le premier circuit fermé 11a est un circuit principal, tandis que le deuxième circuit fermé 11b est un circuit secondaire.

Ainsi, le fluide caloporteur C circulant dans le circuit secondaire 11b est prélevé dans le vase d'expansion 32 au niveau d'un point de prélèvement 33. Plus particulièrement, le point de prélèvement 33 est disposé à une certaine hauteur « h1 » dans le vase d'expansion 32, telle que le ratio entre cette hauteur « h1 » et la hauteur « h2 » de fluide au-dessus du point de prélèvement 33 soit proche du ratio des volumes de fluide présents respectivement dans les circuits principal 11a et secondaire 11b. Ainsi en cas de perforation des surfaces d'échange du deuxième échangeur source froide 12', le niveau de fluide caloporteur C dans le vase d'expansion 32 diminue jusqu'à passer en dessous du point de prélèvement 33. Le circuit secondaire 11b n'est alors plus alimenté en fluide caloporteur C et le circuit principal 11a peut continuer à fonctionner normalement. Ce mode de réalisation permet de se passer du dispositif de détection de fuite 34, de la vanne 36 et de son système de commande des figures 4 et 5.

Les première P' et deuxième P" pompe permettent la circulation du fluide caloporteur C dans les circuits fermés 11a, 11b.

La figure 7 illustre plus précisément la section amont 104, comportant un premier cadre 105 d'arrêt d'impact oiseaux et un deuxième cadre 105' d'arrêt d'impact oiseaux.

Le premier cadre 105 d'arrêt oiseaux délimite la lèvre d'entrée d'air 106, tandis que le deuxième cadre 105' d'arrêt d'impact oiseaux délimite la section amont 104. Plus précisément, la lèvre d'entrée d'air 106 s'étend en amont du premier cadre 105 d'arrêt oiseaux, et la section amont s'étend en amont en amont du deuxième cadre 105' d'arrêt oiseaux.

Le deuxième cadre 105' d'arrêt d'impact oiseaux est au niveau d'une soufflante 107 du turboréacteur 126, voire légèrement en amont de ladite soufflante 107. L'amont est désigné par la flèche « f ».

En aval du deuxième cadre 105' débute la section médiane 110 comportant l'échangeur source froide 12 (figure 3).

En amont du premier cadre 105 d'arrêt d'impact oiseaux, débute la lèvre d'entrée d'air 106.

Le deuxième échangeur source froide 12' tel que décrit au regard des figures 4 à 6 est disposé dans la lèvre d'entrée d'air 106.

En particulier, le premier échangeur source froide 12 est disposé sur un inverseur de poussée et le deuxième échangeur source froide 12' est disposé dans la lèvre d'entrée d'air 106.

Dans une variante non représentée, le deuxième échangeur source froide 12' est disposé dans la nacelle, dans une zone exposée aux impacts de débris provenant de l'ensemble propulsif opposé de l'aéronef 123 de la figure 1, c'est-à-dire dans le cadran inférieur proximal de l'une quelconque des sections amont 104, médiane 110 et/ou aval 112.

## Revendications

1. Aéronef (123) comportant un fuselage (124) disposé dans un plan longitudinal (p) et au moins deux ensembles propulsifs (125a, 125b) disposés dans un plan transversal au plan longitudinal (p) de part et d'autre du fuselage (124) et comportant une nacelle (100), la nacelle (100) étant sensiblement tubulaire et étant divisée en quatre cadrans (40, 41, 42, 43) sensiblement identiques entre un point supérieur (1), un point inférieur (3), un point latéral proximal (2) par rapport au plan longitudinal (p) et un point latéral distal (4) par rapport au plan longitudinal (p), de sorte que la nacelle (100) comporte :
- Un cadran supérieur proximal (40),
- Un cadran supérieur distal (43),
- Un cadran inférieur proximal (41), et
- Un cadran inférieur distal (42),
La nacelle comportant en outre :
- Une section amont (104) comprenant un bord d'attaque formant une lèvre d'entrée d'air (106),
- Une section médiane (110), et
- Une section aval (112) comprenant un bord de fuite,
la nacelle comportant au moins un échangeur de chaleur surfacique (12), dit premier échangeur source froide, entre un fluide caloporteur (C) et un flux d'air froid (F), le premier échangeur source froide étant intégré dans un premier circuit fermé (11a) dans lequel circule le fluide caloporteur, et disposé dans l'un quelconque des cadrans supérieur proximal (40), supérieur distal (43) et/ou inférieur distal (42), et dans la section médiane (110) et/ou aval (112),
la nacelle (100) comportant un vase d'expansion (32) disposé dans le premier circuit fermé (11a), afin de définir une pression maximale et/ou minimale dans certaines portions du premier circuit fermé,
la nacelle (100) comportant au moins deux échangeurs source froide (12, 12'), dont au moins le premier échangeur source froide, le premier échangeur source froide (12) étant disposé dans l'un quelconque des cadrans supérieur proximal (40), supérieur distal (43) et/ou inférieur distal (42), et dans la section médiane (110) et/ou aval (112), et comportant au moins un échangeur (12'), dit deuxième échangeur source froide, disposé dans la section amont (104) et/ou dans le cadran inférieur proximal (41), **caractérisé en ce que** le premier échangeur source froide (12) est intégré dans le premier circuit fermé (11a) et le deuxième échangeur source froide (12') est intégré dans un deuxième circuit fermé (11b) de sorte que le fluide caloporteur circulant dans le deuxième circuit fermé(11b) soit prélevé dans le vase d'expansion (32) au niveau d'un point de prélèvement (33), de préférence à une hauteur (h1) telle que le ratio entre cette hauteur (h1) et la hauteur (h2) de fluide caloporteur restant au-dessus du point de prélèvement (33) soit proche du ratio des volumes de fluide caloporteur présents respectivement dans le premier circuit fermé (11a) et le deuxième circuit fermé (11b).

2. Aéronef (123) selon la revendication précédente, dans lequel la nacelle (100) comporte une structure externe (103) comprenant un carénage externe (103a) définissant une surface aérodynamique externe, et un carénage interne (103b) définissant une surface aérodynamique interne, les carénages interne et externe étant reliés en amont par le bord d'attaque formant lèvre d'entrée d'air (106), et le premier échangeur source froide (12) étant disposé au contact du carénage interne (103b) et/ou externe (103a) de la nacelle (100).

3. Aéronef (123) selon la revendication précédente, dans lequel le premier échangeur source froide est formé au moins en partie par une double paroi du carénage interne et/ou externe de la nacelle.

4. Aéronef (123) selon l'une des revendications 2 ou 3, dans lequel au moins un des premier et deuxième échangeurs source froide (12, 12') est disposé au contact du carénage interne (103b) de la nacelle et au moins un des premier et deuxième échangeurs source froide (12, 12') est disposé au contact du carénage externe (103a) de la nacelle.

5. Aéronef (123) selon l'une quelconque des revendications précédentes, dans lequel le deuxième échangeur source froide (12') est disposé au moins en partie dans la lèvre d'entrée d'air (106).

## Patentansprüche

1. Flugzeug (123), das einen Rumpf (124) aufweist, der in einer Längsebene (p) angeordnet ist, und mindestens zwei Antriebseinheiten (125a, 125b), die in einer Ebene quer zu der Längsebene (p) auf beiden Seiten des Rumpfes (124) angeordnet sind, und, das eine Gondel (100) aufweist, wobei die Gondel (100) im Wesentlichen rohrförmig ist und in vier Quadranten (40, 41, 42, 43), die im Wesentlichen identisch sind, zwischen einem oberen Punkt (1), einem unteren Punkt (3), einem in Bezug auf die Längsebene (p) proximalen seitlichen Punkt (2) und einem in Bezug auf die Längsebene (p) distalen seitlichen Punkt (4) unterteilt ist, so dass die Gondel (100) Folgendes aufweist:
- einen proximalen oberen Quadranten (40),
- einen distalen oberen Quadranten (43),
- einen proximalen unteren Quadranten (41), und
- einen distalen unteren Quadranten (42),
wobei die Gondel ferner Folgendes aufweist:
- einen vorgelagerten Abschnitt (104), der eine Vorderkante umfasst, die eine Lufteinlasslippe (106) bildet,
- einen mittleren Abschnitt (110) und
- einen nachgelagerten Abschnitt (112), der eine Hinterkante umfasst,
wobei die Gondel mindestens einen Oberflächenwärmetauscher (12), den ersten Kaltquellen-Wärmetauscher, zwischen einem Wärmeträgerfluid (C) und einem Kaltluftstrom (F) aufweist, wobei der erste Kaltquellen-Wärmetauscher in einen ersten geschlossenen Kreislauf (11a) integriert ist, in dem das Wärmeträgerfluid zirkuliert, und in einem des proximalen oberen (40), des distalen oberen (43) und/oder des distalen unteren (42) Quadranten und in dem mittleren (110) und/oder nachgelagerten Abschnitt (112) angeordnet ist,
wobei die Gondel (100) einen in dem ersten geschlossenen Kreislauf (11a) angeordneten Ausdehnungsbehälter (32) aufweist, um einen maximalen und/oder minimalen Druck in bestimmten Abschnitten des ersten geschlossenen Kreislaufs zu definieren,
wobei die Gondel (100) mindestens zwei Kaltquellen-Wärmetauscher (12, 12') aufweist, von denen mindestens der erste Kaltquellen-Wärmetauscher, der erste Kaltquellen-Wärmetauscher (12), in einem des proximalen oberen (40), des distalen oberen (43) und/oder des distalen unteren (42) Quadranten und in dem mittleren (110) und/oder nachgelagerten (112) Abschnitt angeordnet ist, und mindestens einen Wärmetauscher (12'), den zweiten Kaltquellen-Wärmetauscher, aufweist, der in dem vorgelagerten Abschnitt (104) und/oder in dem proximalen unteren Quadranten (41) angeordnet ist, **dadurch gekennzeichnet, dass** der erste Kaltquellen-Wärmetauscher (12) in den ersten geschlossenen Kreislauf (11a) integriert ist und der zweite Kaltquellen-Wärmetauscher (12') in einen zweiten geschlossenen Kreislauf (11b) integriert ist, so dass das in dem zweiten geschlossenen Kreislauf (11b) zirkulierende Wärmeträgerfluid an einem Entnahmepunkt (33) aus dem Ausdehnungsgefäß (32) entnommen wird, vorzugsweise in einer Höhe (h1), so dass das Verhältnis zwischen dieser Höhe (h1) und der Höhe (h2) des Wärmeträgerfluids, das über dem Entnahmepunkt (33) verbleibt, nahe dem Verhältnis der in dem ersten geschlossenen Kreislauf (11a) beziehungsweise in dem zweiten geschlossenen Kreislauf (11b) vorhandenen Wärmeträgerfluidvolumina liegt.

2. Flugzeug (123) nach dem vorhergehenden Anspruch, wobei die Gondel (100) eine äußere Struktur (103) aufweist, die eine äußere Verkleidung (103a), die eine äußere aerodynamische Oberfläche definiert, und eine innere Verkleidung (103b) umfasst, die eine innere aerodynamische Oberfläche definiert, wobei die innere und die äußere Verkleidung stromaufwärts durch die Vorderkante, die eine Lufteinlasslippe (106) bildet, verbunden sind, und der erste Kaltquellen-Wärmetauscher (12) in Kontakt mit der inneren (103b) und/oder der äußeren Verkleidung (103a) der Gondel (100) angeordnet ist.

3. Flugzeug (123) nach dem vorhergehenden Anspruch, wobei der erste Kaltquellen-Wärmetauscher mindestens teilweise durch eine Doppelwand der inneren und/oder äußeren Verkleidung der Gondel ausgebildet ist.

4. Flugzeug (123) nach einem der Ansprüche 2 oder 3, wobei mindestens einer des ersten und des zweiten Kaltquellen-Wärmetauschers (12, 12') in Kontakt mit der inneren Verkleidung (103b) der Gondel angeordnet ist und mindestens einer des ersten und des zweiten Kaltquellen-Wärmetauschers (12, 12') in Kontakt mit der äußeren Verkleidung (103a) der Gondel angeordnet ist.

5. Flugzeug (123) nach einem der vorhergehenden Ansprüche, wobei der zweite Kaltquellen-Wärmetauscher (12') mindestens teilweise in der Lufteinlasslippe (106) angeordnet ist.

## Claims

1. An aircraft (123) comprising a fuselage (124) disposed in a longitudinal plane (p) and at least two propulsion units (125a, 125b) disposed in a plane transverse to the longitudinal plane (p) on either side of the fuselage (124) and comprising a nacelle (100), the nacelle (100) being substantially tubular and being divided into four substantially identical dials (40, 41, 42, 43) between an upper point (1), a lower point (3), a proximal lateral point (2) relative to the longitudinal plane (p) and a distal lateral point (4) relative to the longitudinal plane (p), such that the nacelle (100) comprises:
- A proximal upper dial (40),
- A distal upper dial (43),
- A proximal lower dial (41), and
- A distal lower dial (42),
The nacelle further comprising:
- An upstream section (104) comprising a leading edge forming an air inlet lip (106),
- A middle section (110), and
- A downstream section (112) comprising a trailing edge,
the nacelle comprising at least one surface heat exchanger (12), called first cold source exchanger, between a heat transfer fluid (C) and a cold air flow (F), the first cold source exchanger being integrated into a first closed circuit (11a) in which the heat transfer fluid circulates, and disposed in any one of the proximal upper dial (40), distal upper dial (43) and/or distal lower dial (42), and in the middle section (110) and/or downstream section (112),
the nacelle (100) comprising an expansion tank (32) disposed in the first closed circuit (11a), in order to define a maximum and/or minimum pressure in some portions of the first closed circuit,
the nacelle (100) comprising at least two cold source exchangers (12, 12'), including at least the first cold source exchanger, the first cold source exchanger (12) being disposed in any one of the proximal upper dial (40), distal upper dial (43) and/or distal lower dial (42), and in the middle section (110) and/or downstream section (112), and comprising at least one exchanger (12'), called second cold source exchanger, disposed in the upstream section (104) and/or in the proximal lower dial (41),
**characterized in that** the first cold source exchanger (12) is integrated into the first closed circuit (11a) and the second cold source exchanger (12') is integrated into a second closed circuit (11b) such that the heat transfer fluid circulating in the second closed circuit (11b) is withdrawn from the expansion tank (32) at a withdrawal point (33), preferably at a height (h1) such that the ratio between this height (h1) and the height (h2) of heat transfer fluid remaining above the withdrawal point (33) is close to the ratio of the heat transfer fluid volumes present respectively in the first closed circuit (11a) and the second closed circuit (11b).

2. The aircraft (123) according to the preceding claim, wherein the nacelle (100) comprises an outer structure (103) comprising an outer fairing (103a) defining an outer aerodynamic surface, and an inner fairing (103b) defining an inner aerodynamic surface, the inner and outer fairings being connected upstream by the leading edge forming the air inlet lip (106), and the first cold source exchanger (12) being disposed in contact with the inner (103b) and/or outer (103a) fairing(s) of the nacelle (100).

3. The aircraft (123) according to the preceding claim, wherein the first cold source exchanger is formed at least partially by a double wall of the inner and/or outer fairing(s) of the nacelle.

4. The aircraft (123) according to any of claims 2 or 3, wherein at least one of the first and second cold source exchangers (12, 12') is disposed in contact with the inner fairing (103b) of the nacelle, and at least one of the first and second cold source exchangers (12, 12') is disposed in contact with the outer fairing (103a) of the nacelle.

5. The aircraft (123) according to any one of the preceding claims, wherein the second cold source exchanger (12') is disposed at least partially in the air inlet lip (106).
